# EUROPEAN PATENT APPLICATION

(11) **EP 4 653 753 A1**
(43) Date of publication of application: **26.11.2025**
(21) Application number: 23917655.5
(22) Date of filing: 29.11.2023
(51) Int. Cl.: F17C 13/02, G06Q 50/06

(54) **REMAINING GAS QUANTITY MANAGEMENT SYSTEM**

(30) Priority: 16.01.2023 JP 2023004471
(71) Applicant: Panasonic Intellectual Property Management Co., Ltd., Kadoma-shi, Osaka 571-0057 (JP)
(72) Inventor: YAMASHITA, Masumi, Kadoma-shi, Osaka 571-0057 (JP); WATANABE, Takashi, Kadoma-shi, Osaka 571-0057 (JP); SHIRASAWA, Tadanori, Kadoma-shi, Osaka 571-0057 (JP); WATANABE, Kenichi, Kadoma-shi, Osaka 571-0057 (JP)
(74) Representative: SSM Sandmair
(86) International application number: PCT/JP2023/042765
(87) International publication number: WO 2024/154443

(57) **Abstract**

A gas remaining amount management system includes: a flow rate measurer that measures a gas flowing to a gas appliance from a gas container located at a consumer's place or at each of a plurality of consumer's places; a remaining amount calculator that calculates a gas remaining amount of the gas container based on a measurement result of the flow rate measurer; a first calculator that calculates a replacement timing based on the gas remaining amount by a first calculating method, the replacement timing being a timing at which the gas container is replaced; a second calculator that calculates the replacement timing based on the gas remaining amount by a second calculating method different from the first calculating method; and an informer that informs of the replacement timing based on any one of a calculation result of the first calculator and a calculation result of the second calculator.

## Description

### Technical Field

The present invention relates to a gas remaining amount management system that manages gas remaining amounts of respective consumer's places.

### Background Art

There has been a system that manages a gas remaining amount in a gas container. For example, PTL 1 discloses a consumption prediction device including a remaining amount predictor that predicts the gas remaining amount in a gas container by using daily gas consumptions acquired by an acquirer and prospective gas consumptions (i.e., future gas consumptions) for a preset number of days which are predicted by a consumption predictor.

### Citation List

### Patent Literature

PTL 1: Japanese Laid-Open Patent Application Publication No. 2019-020830

### Summary of Invention

### Technical Problem

According to the above conventional technology, the gas remaining amount is predicted by using the daily gas consumptions and the prospective gas consumptions, i.e., by using past data of the gas consumption and future prediction data of the gas consumption. However, when there is no effective past data of the gas consumption, it is difficult to predict the remaining amount. To be specific, there is a problem that when the past data of the gas consumption, by which a gas consumption tendency at a consumer's place can be acquired, is inadequate, it is difficult to manage the gas remaining amount with a high degree of accuracy.

An object of the present invention is to provide a gas remaining amount management system that can manage a gas remaining amount in a gas container at a consumer's place with a high degree of accuracy.

### Solution to Problem

A gas remaining amount management system of the present invention includes: a flow rate measurer that measures a gas flowing to a gas appliance from a gas container located at a consumer's place or at each of a plurality of consumer's places; a remaining amount calculator that calculates a gas remaining amount of the gas container based on a measurement result of the flow rate measurer; a first calculator that calculates a replacement timing based on the gas remaining amount by a first calculating method, the replacement timing being a timing at which the gas container is replaced; a second calculator that calculates the replacement timing based on the gas remaining amount by a second calculating method different from the first calculating method; and an informer that informs of the replacement timing based on any one of a calculation result of the first calculator and a calculation result of the second calculator.

According to the present invention, the first calculating method of calculating the replacement timing by the first calculator and the second calculating method of calculating the replacement timing by the second calculator are different from each other. Moreover, the informer informs of the replacement timing based on any one of the calculation result of the first calculator and the calculation result of the second calculator. Thus, even when there is no predetermined information necessary to calculate the replacement timing in any one of the first calculating method and the second calculating method, the replacement timing can be calculated by the other of the first calculating method and the second calculating method. Thus, the gas remaining amount of the gas container of the consumer's place can be managed with a high degree of accuracy.

In the above invention, in the first calculating method, the first calculator may calculate the replacement timing based on past data regarding gas consumption of the consumer's place before the replacement timing is calculated, and in the second calculating method, the second calculator may calculate the replacement timing without based on the past data.

According to the above configuration, when the necessary past data is present, the first calculator can calculate the replacement timing. Moreover, even when the necessary past data is absent, the second calculator can calculate the replacement timing. Therefore, the replacement timing can be calculated regardless of the presence or absence of the necessary past data. Moreover, when the replacement timing is calculated by always using the past data, a load is applied to the CPU, the memory, and the like, and a calculation time increases. However, when the replacement timing is calculated without using the past data, the load applied to the CPU, the memory, and the like can be reduced, and the calculation time can be reduced, and therefore, the gas remaining amount can be efficiently managed.

### Advantageous Effects of Invention

The present invention can provide the gas remaining amount management system that can manage the gas remaining amount in the gas container at the consumer's place with a high degree of accuracy.

### Brief Description of Drawings

FIG. 1 is a block diagram showing a gas remaining amount management system according to one embodiment.
FIG. 2 is a block diagram showing the configurations of a consumer's place and a center server in the gas remaining amount management system of FIG. 1.
FIG. 3 is a graph for explaining one example of a method of predicting a gas remaining amount.
FIG. 4 is a flowchart showing one example of the flow of steps in the gas remaining amount management system.
FIG. 5 is a flowchart showing another example of the flow of the steps in the gas remaining amount management system.

### Description of Embodiments

Hereinafter, gas remaining amount management systems according to embodiments of the present invention will be described with reference to the drawings. Each gas remaining amount management system described below is merely one embodiment of the present invention. Therefore, the present invention is not limited to the following embodiments, and additions, deletions, and modifications may be made within the scope of the present invention.

### Embodiment 1

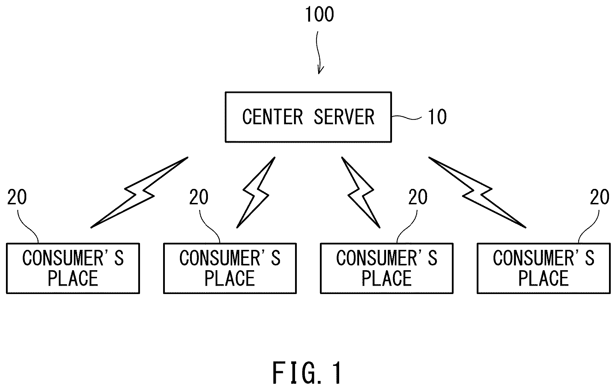

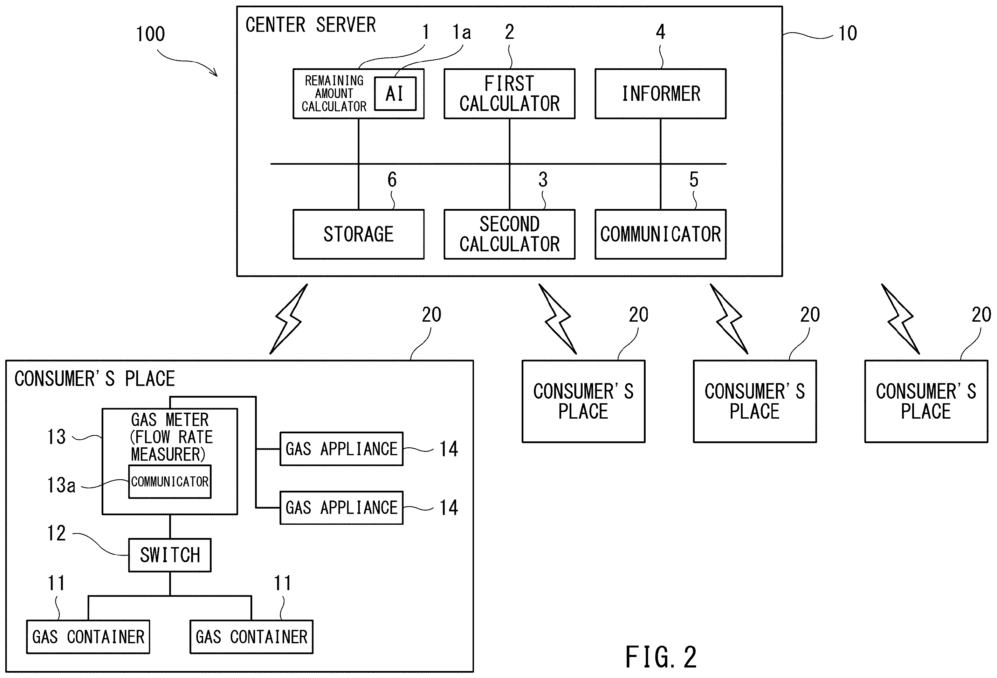

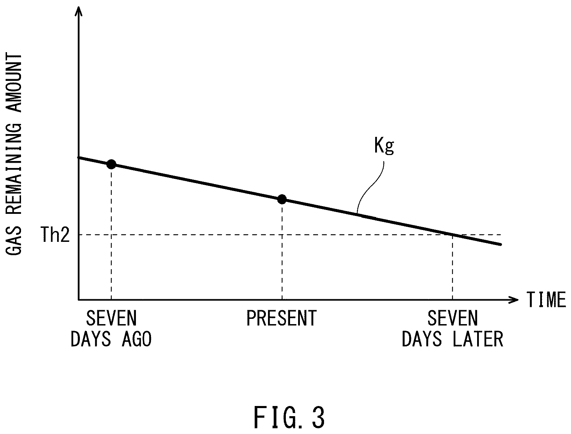

FIG. 1 is a block diagram showing a gas remaining amount management system 100 according to the present embodiment. FIG. 2 is a block diagram showing the detailed configurations of a consumer's place 20 and a center server 10 in the gas remaining amount management system 100 of FIG. 1. FIG. 3 is a graph for explaining one example of a method of predicting a gas remaining amount.

As shown in FIG. 1, the gas remaining amount management system 100 includes the center server 10 and the consumer's places 20. FIG. 1 shows four consumer's places 20. However, in the gas remaining amount management system 100, the number of consumer's places 20 may be three or less or may be five or more.

As shown in FIG. 2, each consumer's place 20 includes two gas containers 11, a switch 12, a gas meter 13, and two gas appliances 14. The gas meter 13 corresponds to a flow rate measurer. Examples of the consumer's place 20 include a hospital, a school, a municipality facility, a nursing facility, an ordinary home, and a commercial facility. However, the consumer's place is not limited to these and may be a building that may use gas.

The gas container 11 is also called a gas bomb and is filled with gas, such as LP gas (liquefied petroleum gas). Hereinafter, the LP gas is simply referred to as gas. The switch 12 switches a gas supply passage such that the gas in one of the two gas containers 11 is supplied to the consumer's place 20. Thus, even when the gas in one of the two gas containers 11 runs out, the gas in the other gas container 11 may be supplied to the gas appliance 14.

Such gas run-out can be defined as below. In the present embodiment, that the switch 12 switches the gas container 11 that is used means that the gas container 11 that has been used until this switching is in a gas run-out state. In this case, the switch 12 detects a change in pressure applied in the gas container 11 and switches the gas container 11. Specifically, the gas container 11 is filled with the gas under pressure. When the gas runs out, the pressure decreases. The switch 12 detects a change in the pressure and switches the gas container 11 at a timing at which the pressure has decreased to a predetermined value. Therefore, the decreasing of the pressure, detected by the switch 12, to the predetermined value can be regarded as the gas run-out. Moreover, the gas run-out includes a case where the gas container 11 is manually switched when the gas appliance 14 cannot be used due to the pressure decrease. Furthermore, the gas run-out includes a case where instead of the pressure, for example, a remaining amount obtained by subtracting a used gas amount from an assumed gas volume is zero or a value close to zero. These definitions are applied to the gas run-out of the two gas containers 11.

The gas meter 13 measures the flow rate of the gas flowing from the gas container 11 to the gas appliance 14 in the consumer's place 20. When the gas meter 13 detects an abnormality, the gas meter 13 may execute a measure, such as blocking of the gas supply passage by a blocker.

The gas meter 13 includes a communicator 13a. The communicator 13a has a function of wirelessly communicating with a communicator 5 in the center server 10. A communication network, such as the Internet, a LAN, or a LPWA (Low Power Wide Area), can be used as a wireless communication system between the communicator 13a and the communicator 5 of the center server 10. The communicator 13a periodically (once a day, for example) transmits information regarding a gas use amount of the consumer's place 20 to the communicator 5 of the center server 10 together with date information regarding use or non-use (i.e., the use amount is zero), an ID that specifies the consumer's place 20, and location area information of the consumer's place 20.

The gas appliance 14 is, for example, a gas stove, a gas water heater, a gas fan heater, or the like. However, the gas container 14 is not limited to these and may be equipment that consumes gas.

The center server 10 includes a remaining amount calculator 1, a first calculator 2, a second calculator 3, an informer 4, the communicator 5, and a storage 6. The remaining amount calculator 1, the first calculator 2, the second calculator 3, and the informer 4 among the above components of the center server 10 are functionally realized by: a microcontroller including a CPU (Central Processing Unit) and a memory (a ROM (Read Only Memory) and a RAM (Random Access Memory)) storing a program; an ASIC (Application Specific Integrated Circuit); or the like. Examples of the storage 6 include various memories and a hard disk. The center server 10 may be configured by a cloud system. In this case, the cloud system and a terminal having the function of the informer 4 may be separately configured.

The remaining amount calculator 1 periodically (once a day, for example) receives a measurement result of the gas use amount which is transmitted from the communicator 13a of the gas meter 13 of each consumer's place 20 through the communicator 5. The remaining amount calculator 1 calculates the gas remaining amount of the gas container 11 from the measurement result, for example, once a day based on gas container installation information given to each consumer's place 20. Information of the calculated gas remaining amount is stored in the storage 6. The gas container installation information is information necessary when calculating the gas remaining amount based on the measurement result of the gas use amount of the gas meter 13, and is information indicating the number of consumer's places 20 associated with one gas container 11. In FIG. 2, the number of consumer's places 20 associated with one gas container 11 is one. Therefore, the gas container installation information indicates one. On the other hand, in the case of, for example, an apartment building including the consumer's places 20, the gas meters 13 are provided for the respective consumer's places 20, and the gas containers 11 are collected at one place. To be specific, the number of gas containers 11 associated with the consumer's places 20 is one. Therefore, for example, when the number of consumer's places 20 is four, the gas container installation information indicates four. The gas container installation information may include the number of gas containers 11 located upstream of the switch 12 in the consumer's place 20. The remaining amount calculator 1 may include an artificial intelligence 1a that calculates the gas remaining amount in the gas container 11.

The remaining amount calculator 1 may use a vaporization rate when calculating the gas remaining amount. In this case, the remaining amount calculator 1 calculates the gas remaining amount by using the vaporization rate corresponding to a location area of the consumer's place 20 corresponding to the gas meter 13 that transmits the measurement result or the vaporization rate corresponding to a date on which the measurement result is obtained by the gas meter 13. Thus, the reliability of gas remaining amount information obtained by the calculation can be further improved.

The first calculator 2 calculates a replacement timing by a first calculating method. The replacement timing is a timing at which the gas container 11 is replaced. Specifically, in the first calculating method, the first calculator 2 calculates the replacement timing based on past data regarding the gas consumption of the consumer's place 20 on a certain day (for example, seven days ago or one month ago) before the replacement timing is calculated or in a certain period of time before the replacement timing is calculated.

The first calculator 2 acquires, from the storage 6, information of the present gas remaining amount of the consumer's place 20 and information of the gas remaining amount of the consumer's place 20, for example, seven days ago which are calculated by the remaining amount calculator 1. Then, based on the acquired information of the present gas remaining amount and the acquired information of the gas remaining amount seven days ago, as shown in FIG. 3, the first calculator 2 acquires a straight line Kg having an inclination indicating a decrease tendency of the gas remaining amount. The future gas remaining amount based on the present time can be predicted by the straight line Kg. In the present embodiment, based on the straight line Kg, the first calculator 2 calculates, as the replacement timing, a timing at which the gas remaining amount (prediction value) a predetermined number of days later (seven days later, for example) based on the present time is smaller than a predetermined second threshold Th2. The predetermined number of days can be set in accordance with, for example, the number of days required for the replacement of the gas container 11 by an operator.

The second calculator 3 calculates the replacement timing by a second calculating method different from the first calculating method. Specifically, in the second calculating method, the second calculator 3 calculates the replacement timing without based on the past data regarding the gas consumption of the consumer's place 20 in a predetermined period of time before the replacement timing is calculated. The second calculating method executed by the second calculator 3 is useful when there is no past data on a certain day (seven days ago or one month ago, for example) before the replacement timing is calculated. Even when there is the past data on a certain day before the replacement timing is calculated, the second calculator 3 does not exclude calculating the replacement timing by the second calculating method.

In the second calculating method, the second calculator 3 calculates the replacement timing by using a predetermined first threshold Th1. The second calculator 3 calculates the replacement timing based on a comparison between the gas remaining amount stored in the storage 6 and the first threshold Th1. In the present embodiment, as the replacement timing, the second calculator 3 calculates a timing at which the gas remaining amount becomes the first threshold Th1 or less. Moreover, the second calculator 3 does not regard, as the replacement timing, a timing at which the gas remaining amount is larger than the first threshold Th1. Although not shown, each of the first calculator 2 and the second calculator 3 may include an artificial intelligence that realizes the above functions. Moreover, each of the first threshold Th1 and the second threshold Th2 may be such a value that the gas remaining amount of the gas container 11 becomes, for example, 50% of the volume of the gas container 11. It should be noted that the above "50%" may be 50% of the total of the volumes of the gas containers 11 of each consumer's place 20 (i.e., the sum of the volumes of the gas containers 11 of each consumer's place 20) or may be 50% of the volume of any one of the gas containers 11.

The informer 4 informs of the replacement timing based on any one of the calculation result of the first calculator 2 and the calculation result of the second calculator 3. The informer 4 controls a display, an audio device, or the like to inform of warning. When the gas remaining amount of the consumer's place 20 is smaller than the first threshold Th1 or the second threshold Th2, the informer 4 informs the operator, who replaces the gas container 11, of the warning that urges the operator to replace the gas container 11. A method of informing of this warning may be the distribution of a mail to the operator. The above informing may be performed by a method of: creating a list of the consumer's places 20 in each of which the gas remaining amount is smaller than the first threshold Th1 or the second threshold Th2; and transmitting this list to the operator once a day, for example.

The storage 6 stores the information of the gas use amount of the consumer's place 20, which has been received from the communicator 13a through the communicator 5, together with the date information regarding use or non-use (i.e., the use amount is zero), the ID that specifies the consumer's place 20, and the location area information of the consumer's place 20. Moreover, the storage 6 stores the first threshold Th1, the second threshold Th2, the information regarding the gas remaining amount calculated by the remaining amount calculator 1, and the like.

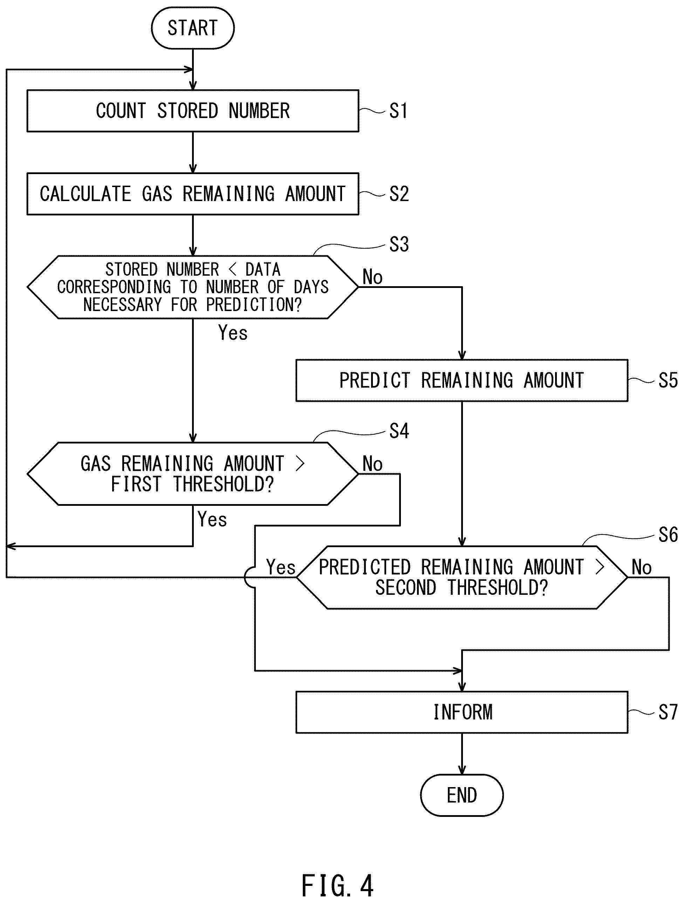

Next, the flow of a series of steps in the gas remaining amount management system 100 will be described. FIG. 4 is a flowchart showing one example of the flow of the steps in the gas remaining amount management system 100.

As shown in FIG. 4, first, the remaining amount calculator 1 counts a stored number that is the number of pieces of information of the gas use amount of the consumer's place 20 which are stored in the storage 6 (Step S1). In this case, that the stored number is, for example, seven means that the pieces of information of the gas use amount for seven days are stored in the storage 6.

Next, based on the information of the gas use amount, the remaining amount calculator 1 calculates the gas remaining amount of the gas container 11 of the consumer's place 20 (Step S2).

Next, the remaining amount calculator 1 determines whether or not the stored number is the number of days necessary to predict the gas remaining amount (Step S3). The number of days necessary to predict the gas remaining amount can be variously set in accordance with the method of predicting the gas remaining amount. One example of the number of days necessary to predict the gas remaining amount is seven. When the stored number is smaller than the number of days necessary to predict the gas remaining amount (Yes in Step S3), the second calculator 3 compares the gas remaining amount calculated by the remaining amount calculator 1 with the first threshold Th1 (Step S4).

When the second calculator 3 determines that the gas remaining amount is larger than the first threshold Th1 (Yes in Step S4), the remaining amount calculator 1 returns to Step S1 and repeats Step S1 and the subsequent steps. On the other hand, when the second calculator 3 determines that the gas remaining amount is the first threshold Th1 or less, i.e., that the replacement timing has come (No in Step S4), the informer 4 performs the informing (Step S7).

On the other hand, when the stored number is not less than the number of days necessary to predict the gas remaining amount (No in Step S3), the first calculator 2 acquires the straight line Kg in order to predict the remaining amount (Step S5). Then, based on the straight line Kg, the first calculator 2 compares a predicted remaining amount a predetermined number of days later (seven days later, for example) based on the present time with the second threshold Th2 (Step S6).

When the first calculator 2 determines that the predicted remaining amount is larger than the second threshold Th2 (Yes in Step S6), the remaining amount calculator 1 returns to Step S1 and repeats Step S1 and the subsequent steps. On the other hand, when the first calculator 2 determines that the predicted remaining amount is the second threshold Th2 or less, i.e., that the replacement timing has come (No in Step S6), the informer 4 performs the informing (Step S7).

As described above, according to the gas remaining amount management system 100 of the present embodiment, the first calculating method of calculating the replacement timing by the first calculator 2 and the second calculating method of calculating the replacement timing by the second calculator 3 are different from each other. Moreover, the informer 4 informs of the replacement timing based on any one of the calculation result of the first calculator 2 and the calculation result of the second calculator 3. Thus, even when there is no predetermined information (past data in the present embodiment) necessary to calculate the replacement timing in any one of the first calculating method and the second calculating method, the replacement timing can be calculated by the other of the first calculating method and the second calculating method. Thus, the gas remaining amount of the gas container 11 of the consumer's place 20 can be managed with a high degree of accuracy.

### Embodiment 2

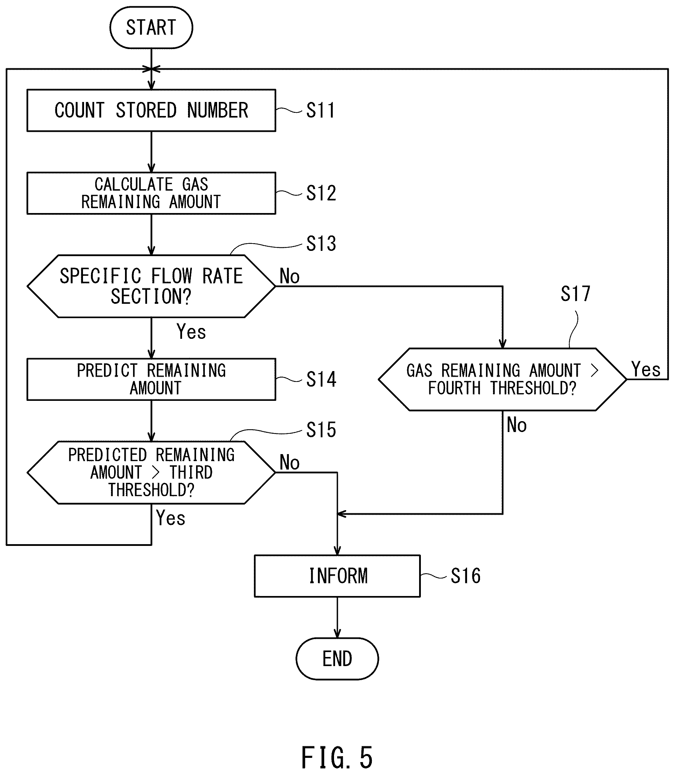

Next, another example of the steps in the gas remaining amount management system 100 will be described. FIG. 5 is a flowchart showing another example of the flow of the steps in the gas remaining amount management system 100. In the present embodiment, the gas meter 13 has a function of determining whether or not a combination (i.e., a use pattern) of the range of a use flow rate of the gas at the consumer's place 20 and the range of a use time of the gas at the consumer's place 20 corresponds to a specific flow rate section. Examples of the specific flow rate section include: a specific flow rate section in which a water heater is assumed to be used; a specific flow rate section in which a stove is assumed to be used; and a specific flow rate section in which a fan heater is assumed to be used. Moreover, examples of the specific flow rate section may include a specific flow rate section in which the gas appliance 14 other than the above is assumed to be used. The future gas use amount is predicted based on such specific flow rate sections. Thus, the prediction of the gas remaining amount can be performed with a high degree of accuracy. The gas meter 13 transmits information regarding the specific flow rate section, which is detected based on the use flow rate of the gas at the consumer's place 20 and the use time of the gas at the consumer's place 20, to the center server 10 through the communicator 13a.

As shown in FIG. 5, first, the remaining amount calculator 1 counts the stored number that is the number of pieces of information of the gas use amount of the consumer's place 20 which are stored in the storage 6 (Step S11).

Next, the remaining amount calculator 1 calculates the gas remaining amount of the gas container 11 of the consumer's place 20 based on the information of the gas use amount (Step S12). Next, the remaining amount calculator 1 determines whether or not the combination of the range of the use flow rate of the gas at the consumer's place 20 and the range of the use time of the gas at the consumer's place 20 corresponds to the specific flow rate section (Step S13). When the combination of the range of the use flow rate of the gas at the consumer's place 20 and the range of the use time of the gas at the consumer's place 20 corresponds to the specific flow rate section (Yes in Step S13), the first calculator 2 acquires the straight line Kg in order to predict the remaining amount based on the past data (Step S14). Then, the first calculator 2 compares the predicted remaining amount a predetermined number of days later (seven days later, for example) based on the present time with a third threshold Th3 (Step S15). In place of Step S13, the gas meter 13 may determine whether or not the above combination corresponds to the specific flow rate section. In this case, the center server 10 may access the gas meter 13 and acquire the information indicating that the above combination corresponds to the specific flow rate section.

When the first calculator 2 determines that the predicted remaining amount is larger than the third threshold Th3 (Yes in Step S15), the remaining amount calculator 1 returns to Step S11 and repeats Step S11 and the subsequent steps. On the other hand, when the first calculator 2 determines that the predicted remaining amount is the third threshold Th3 or less, i.e., that the replacement timing has come (No in Step S15), the informer 4 performs the informing (Step S16).

On the other hand, when the combination of the range of the use flow rate of the gas at the consumer's place 20 and the range of the use time of the gas at the consumer's place 20 does not correspond to the specific flow rate section (No in Step S13), the second calculator 3 compares the gas remaining amount calculated by the remaining amount calculator 1 with a fourth threshold Th4 (Step S17).

When the second calculator 3 determines that the gas remaining amount is larger than the fourth threshold Th4 (Yes in Step S17), the remaining amount calculator 1 returns to Step S1 and repeats Step S1 and the subsequent steps. On the other hand, when the second calculator 3 determines that the gas remaining amount is the fourth threshold Th4 or less, i.e., that the replacement timing has come (No in Step S17), the informer 4 performs the informing (Step S16).

### Other Embodiments

The present invention is not limited to the above embodiments, and various modifications may be made within the scope of the present invention. Examples are as below.

In another embodiment, the gas meter 13 may have a tool identification function of identifying which gas tool the gas appliance 14 at the consumer's place 20 is. When the gas meter 13 identifies that the gas appliance 14 is the fan heater, the first calculator 2 manages the remaining amount based on the past data. On the other hand, when the gas meter 13 does not identify that the gas appliance 14 is the fan heater, the second calculator 3 manages the remaining amount.

Moreover, in yet another embodiment, when the gas remaining amount is smaller than a predetermined threshold that is based on the capacity of the gas container 11, the first calculator 2 may manage the remaining amount based on the past data. Moreover, when the gas remaining amount is the predetermined threshold or more, it may be determined that the gas remaining amount is adequate with respect to the capacity of the gas container 11.

Furthermore, in still another embodiment, when the gas, which is assumed to be consumed in a predetermined period of time (two weeks, for example) from the present time at the consumer's place 20 and can be acquired based on the straight line Kg by which the future gas remaining amount can be predicted, remains in the gas container 11, the remaining amount may be managed without using the past data. On the other hand, when the gas which is assumed to be consumed in a predetermined period of time (two weeks, for example) from the present time at the consumer's place 20 does not remain in the gas container 11, the remaining amount may be managed by using the past data.

Moreover, in yet another embodiment, the number of days necessary to consume the gas corresponding to the entire capacity of the gas container 11 may be calculated based on the past gas consumption of the consumer's place 20. In this case, when the number of days calculated as above is smaller than the number of days of the past data which is necessary for the prediction, the remaining amount is managed without using the past data. Moreover, when the number of days calculated as above is not less than the number of days of the past data which is necessary for the prediction, the remaining amount is managed by using the past data.

Furthermore, in still another embodiment, when there is the past data for a predetermined period of time (one year, for example), the remaining amount may be managed by using the past data. When there is no past data for the predetermined period of time, the remaining amount may be managed without using the past data.

Moreover, in yet another embodiment, in a predetermined period of time (14 days, for example) after the replacement of the gas container 11, the remaining amount may be managed without using the past data. Moreover, after the predetermined period of time has elapsed since the replacement of the gas container 11, the remaining amount may be managed by using the past data.

Furthermore, in still another embodiment, the remaining amount may be managed based on a decreasing rate of the gas remaining amount of the consumer's place 20. In this case, for example, when the decreasing rate of the gas remaining amount is a positive value, the remaining amount may be managed by using the past data. Moreover, when the decreasing rate of the gas remaining amount is a negative value, the remaining amount may be managed without using the past data.

Moreover, in the above embodiment, the gas remaining amount management system 100 is described as a technical concept including the gas meter 13 and the center server 10. However, the above embodiment is not limited to this. The gas remaining amount management system 100 may be a system provided at the gas meter 13.

Moreover, in the above embodiment, the remaining amount calculator 1, the first calculator 2, the second calculator 3, and the informer 4 are located at the center server 10. However, the above embodiment is not limited to this. The remaining amount calculator 1, the first calculator 2, the second calculator 3, and the informer 4 may be located at the gas meter 13, and the center server 10 may have a function of outputting informing contents.

Moreover, the above embodiment has described an example in which each consumer's place 20 includes two gas containers 11 and two gas appliances 14. However, the above embodiment is not limited to this. The number of gas containers 11 may be one or may be three or more, and the number of gas appliances 14 may be one or may be three or more.

Moreover, in yet another embodiment, the gas remaining amount of the gas container 11 may be calculated by the artificial intelligence 1a. In this case, when the combination of the range of the use flow rate of the gas at the consumer's place 20 and the range of the use time of the gas at the consumer's place 20 corresponds to the specific flow rate section, the remaining amount may be managed by using the past data. On the other hand, when the combination of the range of the use flow rate of the gas at the consumer's place 20 and the range of the use time of the gas at the consumer's place 20 does not correspond to the specific flow rate section, the remaining amount may be managed by using a predetermined threshold without using the past data.

Moreover, in the above embodiment, after it is determined to be Yes in Step S15, it is determined again whether or not the combination of the range of the use flow rate of the gas at the consumer's place 20 and the range of the use time of the gas at the consumer's place 20 corresponds to the specific flow rate section. However, the above embodiment is not limited to this. In another embodiment, when it is determined once that the combination of the range of the use flow rate of the gas at the consumer's place 20 and the range of the use time of the gas at the consumer's place 20 corresponds to the specific flow rate section, the processing of predicting the remaining amount in Step S14 may be continued until the execution of the informing.

Furthermore, in the above embodiment, the gas container 11 is filled with the LP gas (liquefied petroleum gas) as one example of the gas. However, the above embodiment is not limited to this. The gas container 11 may be filled with another gas, such as oxygen.

### Reference Signs List

- 1: remaining amount calculator
- 2: first calculator
- 3: second calculator
- 4: informer
- 10: center server
- 11: gas container
- 13: gas meter
- 14: gas appliance
- 20: consumer's place
- 100: gas remaining amount management system

## Claims

1. A gas remaining amount management system comprising:
a flow rate measurer that measures a gas flowing to a gas appliance from a gas container located at a consumer's place or at each of a plurality of consumer's places;
a remaining amount calculator that calculates a gas remaining amount of the gas container based on a measurement result of the flow rate measurer;
a first calculator that calculates a replacement timing based on the gas remaining amount by a first calculating method, the replacement timing being a timing at which the gas container is replaced;
a second calculator that calculates the replacement timing based on the gas remaining amount by a second calculating method different from the first calculating method; and
an informer that informs of the replacement timing based on any one of a calculation result of the first calculator and a calculation result of the second calculator.

2. The gas remaining amount management system according to claim 1, wherein:
in the first calculating method, the first calculator calculates the replacement timing based on past data regarding gas consumption of the consumer's place before the replacement timing is calculated; and
in the second calculating method, the second calculator calculates the replacement timing without based on the past data.
